# EUROPÄISCHE PATENTSCHRIFT

(11) **EP 1 559 257 B1**
(45) Veröffentlichungstag und Bekanntmachung des Hinweises auf die Patenterteilung: **08.08.2007**
(21) Anmeldenummer: 03757621.2
(22) Anmeldetag: 04.11.2003
(51) Int. Cl.: H04L 29/06, H04J 3/06, H04L 12/18, H04L 1/16, H04R 27/00, H04B 1/20

(54) **VERFAHREN UND VORRICHTUNG ZUR SYNCHRONISIERTEN WIEDERGABE VON DATENSTRÖMEN**
METHOD AND DEVICE FOR THE SYNCHRONISED RESTITUTION OF DATA FLOWS
PROCEDE ET DISPOSITIF POUR RESTITUER DES FLUX DE DONNEES DE MANIERE SYNCHRONISEE

(30) Priorität: 06.11.2002 CH 186102
(43) Veröffentlichungstag der Anmeldung: 03.08.2005
(73) Patentinhaber: Barix AG, 8008 Zürich (CH)
(72) Erfinder: RIETSCHEL, Johannes, CH-8044 Zürich (CH); SAUTER, Silvan, CH-4053 Basel (CH); STÄHELI, Reto, CH-8570 Weinfelden (CH)
(74) Vertreter: Bremi, Tobias Hans
(86) Internationale Anmeldenummer: PCT/CH2003/000720
(87) Internationale Veröffentlichungsnummer: WO 2004/043032

(56) Entgegenhaltungen:
- EP-A- 0 542 345
- WO-A-02/076149
- WO-A-03/023759
- US-A- 6 072 879
- US-A- 6 091 826
- US-B1- 6 353 169
- XIE Y ET AL: "ADAPTIVE MULTIMEDIA SYNCHRONIZATION IN A TELECONFERENCE SYSTEM" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, Bd. 3, 23. Juni 1996 (1996-06-23), Seiten 1355-1359, XP000625031 ISBN: 0-7803-3251-2
- JAN NEWMARCH: "A networked loudspeaker" NN, [Online] 19. Juli 2002 (2002-07-19), Seiten 1-9, XP002241563 Gefunden im Internet: URL:http://jan.netcomp.monash.edu.au/inter netdevices/speaker/speaker.html> [gefunden am 2003-05-14]
- RAMANATHAN ET AL.: "Adaptive Feedback Techniques for Synchronized Multimedia Retrieval over Integrated Networks" IEEE/ACM TRANSACTIONS ON NETWORKING, April 1993 (1993-04), Seiten 246-259, XP000385474 NEW YORK, US

## Beschreibung

### TECHNISCHES GEBIET

Die vorliegende Erfindung betrifft ein Verfahren zur Wiedergabe von über wenigstens ein Netzwerk übertragenen Datenströmen oder Datenpaketen mittels wenigstens zweier wenigstens mittelbar an das Netzwerk angebundener Wiedergabegeräte. Sie betrifft ausserdem ein Datenverarbeitungsprogramm zur Durchführung eines derartigen Verfahrens sowie eine Vorrichtung zur Durchführung eines derartigen Verfahrens.

### STAND DER TECHNIK

Die Übertragung von digital gespeicherten, multimedialen Datenströmen über Netzwerkinfrastruktur, die Speicherung dieser Ströme auf computerähnlichen Apparaten und die Wiedergabe in professionellen Anwendungen und auch im Heimbereich ist bereits omnipräsent. Dies insbesondere im Audiobereich, indem die für die Übertragung und Speicherung notwendigen Datenraten und -mengen dank effektiver Komprimierverfahren (MP3) stark reduziert werden konnten. Im Videosegment arbeiten viele fieberhaft an immer besseren Komprimierverfahren (MPEG-4) um auch hier die "online"-Verfügbarkeit und z.B. den Echtzeitabruf von Spielfilmen mit üblicher Infrastruktur (ADSL, Kabelmodem und PC) möglich zu machen. Im Heimbereich würde sich ein sehr grosser Markt öffnen, wenn Audiodaten sehr genau synchronisiert, ohne Qualitätsverlust, d.h. digital mit Fehlerkorrektur, über verschiedene Medien, insbesondere jedoch per Funk, verteilt ausgegeben werden, könnten. Bisher bekannte Verfahren (z.B. die analoge Modulation der Daten auf HF Träger ohne Rückkanal) sind qualitativ weder hochwertig noch betriebssicher. Zuverlässige Systeme, die z.B. auch einen S/PDIF (Sony/Philips Digital Interface, digitaler Audioausgang) oder analoge Audiosignale ohne merklichen Qualitätsverlust zuverlässig (d.h. mit Rückkanal) über verdrahtete oder drahtlose Infrastruktur verteilen können, sind bisher nicht verfügbar.

Aus der EP-A-0 542 345 offenbart ein Verfahren zur Wiedergabe von Daten über ein Netzwerk, in welchem mehrere Wiedergabegeräte angeordnet sind. Eines dieser Geräte wird dabei als Master im Netzwerk definiert. Der Master wird z.B. in einem automatischen Verfahren zugeordnet. Die Aufgabe dieses Masters besteht darin, Kontrollsignale in zentralisierter Weise abzusetzen und zu koordinieren. Die Synchronisierung der Wiedergabe der Daten erfolgt offenbar individuell.

Ramanathan et al. offenbaren in der Druckschrift "Adaptive feedback techniques for synchronized multimedia retrieval over integrated networks" (IEEE/ACM Transactions on Networking ; April 1993, Seiten 246 - 259), ein Verfahren zur Synchronisation der Wiedergabe von Daten mit mehreren Wiedergabegeräten, wobei eines dieser Wiedergabegeräte als Master dient. Dies wird erreicht durch ein Signalisierungsverfahren, einem "feedback approach", von den Wiedergabegeräten an einen zentralen Server. Dieser sendet Datenmengen, die abhängig sind vom Synchronisierungszustand der jeweiligen Slaves.

### DARSTELLUNG DER ERFINDUNG

Der Erfindung liegt demnach die Aufgabe zugrunde, ein Verfahren zur Verfügung zu stellen, welches es erlaubt, über wenigstens ein Netzwerk übertragene Datenströme oder Datenpakete mittels wenigstens zweier wenigstens mittelbar an das Netzwerk angebundener Wiedergabegeräte in fehlerfreier und synchronisierter Weise wiederzugeben.

Die Lösung dieser Aufgabe wird dadurch erreicht, dass zur Synchronisation der Wiedergabe mit den wenigstens zwei Wiedergabegeräten eines der Wiedergabegeräte als Master seine interne Uhr als Referenz vorgibt und die anderen Wiedergabegeräte als Slave ihre interne Uhr über das Netzwerk mit jener des Masters abgleichen und die Wiedergabe von Datenströmen oder Datenpaketen in Abhängigkeit dieser abgeglichenen Uhr wiedergeben.

Der Kern der Erfindung besteht somit darin, die Synchronisation der einzelnen Wiedergabegeräte durch die Definition einer Referenzuhr zu gewährleisten. Dabei ist der Begriff Uhr nicht im exakten Sinne zu verstehen, sondern vielmehr einfach im Sinne eines zeitlichen Referenzsystems, innerhalb welchem alle Teilnehmer des Systems, d. h. Master und Slave gleich laufen. Mit anderen Worten kann die hier genannte Uhr sowohl absolut nicht der tatsächlichen Uhrzeit entsprechen, als auch in ihrer Laufgeschwindigkeit von der Laufgeschwindigkeit eine Uhr abweichen. Wichtig ist nur, dass die einzelnen Teilnehmer untereinander in einem identischen, gleich getakteten Zeitsystem arbeiten. Die Slaves führen mit anderen Worten ggf. einfach eine zum Master synchron laufende Uhr respektive ein synchron laufendes Referenzsystem zur Wiedergabe der Daten, welche Uhr respektive welches Referenzsystem nicht mit der tatsächlichen, auf dem Slave vorhandenen Uhr identisch sein muss. Es wird dann gewissermassen eine separate Kopie der Master-Uhr auf den Slaves geführt. Die im Rahmen dieser Erfindung wesentliche Synchronisation zielt also nicht in erster Linie darauf ab, so genannte real time Bedingungen sicherstellen zu können, sondern vielmehr darauf, eine möglichst hohe Datenintegrität zu gewährleisten, wobei der Moment des Abspielens nicht von höchster Bedeutung ist, sondern nur die relative Synchronisation. Wesentlich ist beim vorgeschlagenen System der Synchronisation, dass nicht der Master dazu beauftragt ist, die einzelnen Slaves im Takt zu halten, sondern dass die einzelnen Slaves selbstständig für ihre Anpassung an den Master verantwortlich zeichnen und dies selbsttätig durchführen. Dadurch ergibt sich der Vorteil, dass der Master nicht zwingend darüber informiert sein muss, was für weitere Teilnehmer im Netz im Moment gerade in synchronisierter Weise mitspielen. Die Verwaltung eines Systems vereinfacht sich dadurch erheblich. Der Master stellt nur seine Uhr zur Verfügung und der Master selber ändert dieses Referenzsystem auch nicht ab, so sehr es auch von einer tatsächlichen Uhrzeit abweichen mag.

Gemäss einer ersten bevorzugten Ausführungsform der vorliegenden Erfindung handelt es sich beim Netzwerk um ein Netzwerk, in welchem Datenpakete in asynchroner Weise übertragen werden. Die Synchronisation von Datenströmen ist insbesondere dann relevant, wenn das Netzwerk nicht deterministisch ist, d. h. wenn die Daten asynchron übermittelt werden. In einem asynchronen Netzwerk kann nicht davon ausgegangen werden, dass Daten stets die gleiche Zeit von Punkt A zu Punkt B benötigen. Ausserdem werden die Daten nicht in einem konstanten Takt übermittelt. Entsprechend werden in einem derartigen Netzwerk inhärent Daten zu unterschiedlichen Zeitpunkten über unterschiedliche Wege (z.B. über Switches oder Router) bei den Wiedergabegeräten ankommen, was die Synchronisation besonders wichtig macht.

Gemäss einer weiteren bevorzugten Ausführungsform findet der Abgleich der Uhr auf dem Slave nicht nur vor der ersten Wiedergabe beim Einschalten oder Zuschalten des Slave statt, sondern vielmehr auch periodisch während der Wiedergabe der Daten. Diese Aktualisierung ist insbesondere bei langen, zusammenhängenden Datenströmen wichtig, da selbst kleinste Unterschiede in der Laufgeschwindigkeit der internen Uhr von Master und Slave über eine längere Zeit zu einer grossen Differenz führen können. Typischerweise erfolgt eine derartige neue Synchronisation alle 30 Sekunden. Vorzugsweise wird die periodische Aktualisierung dazu verwendet, auf dem Slave eine systematische Anpassung der Laufgeschwindigkeit der internen Uhr des Slave an jene des Masters zum Ausgleich von Unterschieden in der internen Laufzeitcharakteristik von Master und Slave vorzunehmen. Eine derartige systematische Anpassung, welche gewissermassen ein " ziehen " zwischen Slave und Master erlaubt, ist ähnlich zur im Bereich des Abgleichs von klassischen Uhren auf Netzwerken (ntp, Network Time Protocol). Dadurch wird eine möglichst glatte Anpassung zwischen den Zeitsystemen von Master und Slave gewährleistet, und es wird verhindert, dass einfach bei einem mismatch zum Ausgleich von Laufzeitdifferenzen z. B. auf dem Slave Datenpakete weggelassen werden oder Leerstellen eingefügt werden. Dennoch kann es bei grossen Zeitunterschieden (typischerweise mehr als z. B. 100ms im Audiobereich), wie sie aber typischerweise nur dann auftreten, wenn die Datenübertragung problematisch ist, erforderlich werden, die Wiedergabe auf dem Slave durch derartige stufenweise Eingriffe vorzunehmen. Typischerweise besteht die systematische Anpassung darin, die interne Uhr des Slave respektive deren Laufgeschwindigkeit mit einem konstanten Korrekturfaktor zu skalieren.

Der Abgleich der internen Uhr auf dem Slave kann auf unterschiedliche Weise geschehen. Wichtig ist dabei insbesondere, dass nicht einfach die Zeit auf dem Master abgefragt wird und anschliessend nach deren Übertragung tel quel auf dem Slave eingesetzt wird, sondern dass der Tatsache Rechnung getragen wird, dass die Übertragung der Zeit respektive deren Anfrage über das Netz ebenfalls eine gewisse Zeit beansprucht hat. Gerade im Rahmen dieser Erfindung gewünschte Zeitgenauigkeit im Bereich von derartig typischen Übertragungszeiten in Netzwerken liegt, sollte dies berücksichtigt werden. Vorzugsweise wird dabei entsprechend so vorgegangen, dass die interne Uhr des Master vom Slave insbesondere bevorzugt mehrmals abgefragt wird, und indem wenigstens ein, bevorzugt eine Mehrzahl von Datenpaketen, welche mit den Paketen zur Abfrage der Zeit auf dem Master identisch sein können, vom Slave zum Master übertragen und wieder zurückübermittelt werden, und die interne Uhr im Slave in Abhängigkeit einer insbesondere durchschnittlichen Laufzeit von Datenpaketen zwischen Master und Slave an die Uhr im Master angeglichen wird. Es wird mit anderen Worten über mehrere Abfragen eine mittlere Datenlaufzeit, wie sie für das spezifische Netzwerk typisch ist, ermittelt, und erst nach Kenntnis dieser typischen Datenlaufzeit unter deren Berücksichtigung die Zeit auf dem Slave angepasst. Dabei spielt aber normalerweise nicht nur die Datenlaufzeit über das Netzwerk eine Rolle, sondern auch Bearbeitungszeiten in den Geräten. Entsprechend sollten zusätzlich zur Berücksichtigung der Laufzeit als Mittelwert Bearbeitungszeiten in den Geräten, üblicherweise als zusätzlicher konstanter additiver Beitrag berücksichtigt werden.

Wird ein derartiges System von Wiedergabegeräten in Betrieb genommen, so ist es wichtig, rechtzeitig einen Master zu definieren, damit die einzelnen Wiedergabegeräte nicht alle gegenseitig versuchen, sich relativ zueinander abzugleichen. Gemäss einer bevorzugten Ausführungsform der Erfindung wird dies vorteilhafter Weise so gemacht, dass das erste, mit der Wiedergabe beauftragte Wiedergabegerät automatisch als Master definiert wird. Typischerweise verläuft dies so, dass ein Gerät, wenn es zu Wiedergabe aufgefordert wird, sich zunächst einfach einmal als potentiellen Master versteht, aber keinerlei mastertypischen Aktionen beginnt. In dem Moment, in welchem es von einem anderen Wiedergabegerät eine Anfrage bekommt, den abgespielten Datenstrom zur Verfügung zu stellen, wird das Gerät zum Master. Das anfragende Gerät wird automatisch zum Slave. Selbstverständlich ist es auch möglich, ein Gerät als Master zu definieren, diese Lösung weist aber den Nachteil auf, dass, wenn dieser Master aus irgendwelchen Gründen einmal nicht betrieben werden soll oder ausfällt, dass System in einem undefinierten Zustand ist. In entsprechender Weise sollte ausserdem im Protokoll festgehalten werden, dass, bei Ausfall oder Abschalten des aktuellen Masters, sich das erste, dieses realisierende Gerät, automatisch als neuer Master im Netzwerk definiert und die Aufgabe als Master sofort übernimmt.

Das vorgeschlagene Verfahren findet vorzugsweise im Bereich von digitalen Audio- oder Videodaten oder einer Kombination davon Anwendung. Insbesondere bevorzugt handelt es sich entsprechend bei den Daten respektive Datenströmen um komprimierte oder unkomprimierte Audiodateien wie MP3, WAV, MPEG, Windows Media etc. Grundsätzlich kann es sich bei der Wiedergabe entweder um so genannte " multi-room "-Wiedergabe, d. h. um die Wiedergabe von identischen Medien- insbesondere Audiodateien in synchronisierter Weise handeln, oder aber auch um so genannte " multi-channel "-Wiedergabe, bei welcher insbesondere bei Audio-Dateien in Stereoformat oder Vielkanalformaten wie z.B. Dolby 5.1, DTS etc, auf unterschiedlichen Wiedergabegeräten die unterschiedlichen Kanäle wiedergegeben werden.

Gemäss einer weiteren bevorzugten Ausführungsform der vorliegenden Erfindung wird wenigstens ein Teil der Datenströme oder Datenpakete vor der Wiedergabe in den Wiedergabegeräten zwischengepuffert, wobei bei Audiodateien typischerweise im Bereich von ca. 1 bis 5 sec gepuffert wird. Bevorzugt und mit grossem Vorteil z. B. bei Realtime Sprachanwendungen, erfolgt die Pufferung dynamisch und den Gegebenheiten des Netzwerks angepasst. Je kleiner die Puffer sind, desto kürzer ist die Latenzzeit, die gewartet werden muss, bis ein Stream gespielt werden kann. Entsprechend ist es von Vorteil, möglichst kleine Puffer zu verwenden. Je höher die Qualität des verwendeten Netzwerks, umso kleiner können die Puffer gestaltet werden, da in diesem Fall weniger Ausfälle und entsprechend auch weniger Repetitionen nötig sind. Eine dynamische Allozierung des Puffers trägt diesem Sachverhalt optimal Rechnung und kann entsprechend zur Optimierung der Latenzzeit genutzt werden. Diese Pufferung, welche vorzugsweise in einem so genannten Ringpuffer stattfindet, erlaubt eine auf der einen Seite genaue Synchronisation, indem nämlich der Ausgabepointer beim Master und beim Slave einfach gleich gesetzt werden, auf der anderen Seite werden so auch Korrekturmechanismen (so genannte "retry-Protokolle ") wesentlich einfacher möglich, was im Zusammenhang mit der hier angestrebten Datenintegrität von grosser Bedeutung ist.

Insbesondere im Zusammenhang mit der Ausgabe von Audiodateien erweist es sich als vorteilhaft, die Synchronisation der einzelnen Wiedergabegeräte im Bereich von weniger als 100ms auszulegen. Bevorzugt sollten die Laufzeitunterschiede weniger als 10ms oder weniger als 2ms, insbesondere bevorzugt weniger als 1 ms betragen. Aus der Psychoakustik ist bekannt, dass ein normales Gehör in der Lage ist, grössere Laufzeitunterschiede von mehr als 30 ms als Echo wahrzunehmen, was im Rahmen dieser Erfindung eben genau verhindert werden soll. Es zeigt sich, dass auch im bereits genannten "multi-channel " Betrieb eine Genauigkeit von im Bereich von 1 ms genügend ist. Die Synchronisation von Datenströmen in dieser Genauigkeit kann in einem typischen Netzwerk nicht mehr ohne eine aktive Synchronisation der einzelnen Wiedergabegeräte gewährleistet werden, insbesondere können ohne aktive Synchronisation keine weiteren Teilnehmer einfach so zugeschaltet werden. Typischerweise handelt es sich beim Netzwerk um ein klassisches, verkabeltes Netzwerk, vorzugsweise kann es sich dabei aber auch um ein kabelloses Netzwerk, insbesondere ein Funknetzwerk handeln (z. B. Wifi, wireless fidelity, auch IEEE802.11b genannt, oder Nachfolgestandards mit höherer Datenrate wie z.B. IEEE 802.11 a). Soll, wie gemäss einer anderen bevorzugten Ausführungsform der vorliegenden Erfindung vorgeschlagen, ein weiteres Wiedergabegerät in synchronisierter Weise zugeschaltet werden, so geschieht dies vorzugsweise, indem sich das zugeschaltete Gerät automatisch auf den vorhandenen Master abgleicht und nach Pufferung eines Teils der Daten selber die Wiedergabe aufnimmt. Ebenso erweist es sich u.U. als sehr vorteilhaft, die Verzögerung eines Clients gegenüber dem Master gezielt einstellen zu können. Damit lassen sich grosse Räume, Kirchen etc wesentlich besser akustisch mit Daten versorgen und akustische Eigenschaften/Laufzeiten in diesen Gebäuden kompensieren. Es handelt sich dann aber um eine gezielte, d.h. gewünschte und systematische Verzögerung. Die dabei verwendete Zeitverschiebung bei der Wiedergabe auf unterschiedlichen Geräten ist konstant eingestellt und bleibt synchronisiert.

Als Datenquellen für den Master können unterschiedliche Datenquellen in Frage kommen. Die Datenpakete oder Datenströme können entweder von einem separaten Datenserver abgeholt oder von diesem geschickt werden, oder auf einem der Wiedergabegeräte abgeholt oder von diesem geschickt werden, oder auf den Wiedergabegeräten bereits zur Verfügung stehen, oder dem System über einen Analog-Digitalwandler nach Einspeisung in analoger Form in digitaler Form zur Verfügung gestellt werden.

Eine weitere bevorzugte Ausführungsform ist dadurch gekennzeichnet, dass die Datenpakete oder Datenströme von einer Datenquelle in einen Ringpuffer im Master eingelesen werden, wobei jedes eingelesene Byte mit einer eindeutigen Adresse (einfacher Weise einfach ein 32 bit-counter, beginnend bei 0) versehen ist, und dass der Master in einem vom Einlesen des Datenstromes in den Ringpuffer unabhängigen Prozess die Daten des Ringpuffers blockweise, insbesondere sofort nach Einlesen, per Broadcast, insbesondere per UDP Broadcast und weiterhin insbesondere per multicast, auf das Netzwerk schickt, ergänzt durch einen Protokollheader, der unter anderem die Adresse des ersten übermittelten Bytes, die genaue Masterzeit, die Adresse des vom Master als nächstes an den Codec des Masters zu übermittelnden Bytes enthält. Grundsätzlich können die Daten vom Master in unterschiedlicher Weise an die Slaves weitergegeben werden. Der einfachste Ansatz ist ein so genanntes unicast, d. h. der Master verschickt die Daten separat an jeden weiteren Slave. Dies führt aber bei Anwesenheit von mehreren selbst zu einer unnötigen Belastung des Netzwerks. Entsprechend sollte vorzugsweise die Verteilung optimiert so geschehen, dass der Master die Daten mit einem multicast an alle weiteren Wiedergabegeräte weitergibt. Die erforderliche Bandbreite bleibt so unabhängig von der Anzahl der Slaves weitgehend konstant (es kommen nur eventuelle weitere Synchronisationspakete für den Zeitabgleich hinzu, die praktisch keine Bandbreite beanspruchen). Der Ausgabepointer, respektive dessen Position auf dem Master wird an die Slaves als Adresse des vom Master als nächstes an den Codec des Masters zu übermittelnden Bytes übergeben. Dabei wird davon ausgegangen, dass Master und Slave über ähnliche Architekturen verfügen, bei welchen die Zeitspanne zwischen Ansteuerung des Codec und effektiver Ausgabe am Audio-Ausgang (Lautsprecher) so gut wie identisch sind. Wenn dies nicht der Fall ist, müssen entsprechende Korrekturen berücksichtigt werden (z. B. erforderlich bei wesentlichen Verstärkungsverzögerungen in einem der Ausgabegeräte etc.). Wie erwähnt kann die Position des Ausgabepointers auf dem Master einfach als Header mit den eigentlichen Datenpaketen übermittelt werden. Alternativ oder zusätzlich ist es aber auch möglich, die Adresse des vom Master als nächstes an den Codec des Masters zu übermittelnden Bytes wenigstens teilweise in unabhängigen Kontrollblöcken, welche mit den Kontrollblöcken zur Überprüfung der Uhr auf dem Master identisch sein können, zu übermitteln. Hierbei ist es insbesondere auch notwendig, die Laufzeit des Paketes, an Hand der durchschnittlichen Laufzeit oder der vom Server übermittelten Laufzeit, einzubeziehen und den Zähler eventuell dementsprechend zu korrigieren.

Wie bereits weiter oben erwähnt spielt die Integrität der Daten im Zusammenhang mit der vorliegenden Erfindung eine grosse Rolle. Es ist klar, dass unidirektionale Verfahren (wie z.B. analoge oder digitale Übertragung ohne Rückkanal/Rückmeldung wie das genannte Multicast/Broadcast), will man möglichst verlustfreie Übertragung erreichen, nicht ausreichen und ein bidirektionales Kommunikationsverfahren mit Datenpufferung gewählt werden muss, damit bei temporärem Datenverlust eine Wiederholung angefordert und neue Übertragung durchgeführt werden kann, bevor die lokalen Puffer mit bereits übertragenen Daten leer laufen. Entsprechend wird vorzugsweise ein Korrekturmechanismus oder auch "retry-Protokoll" vorgesehen, über welches verlorene oder beschädigte Datenpakete auf den Slaves berichtigt werden können. Entsprechend wird zur Sicherung der Datenintegrität bei von einem Slave festgestelltem Verlust eines Datenteils auf dem Netzwerk dieses Datenteil nach Anforderung vom Slave vom Master wiederholt gesendet. Dies erfolgt nun nicht unmittelbar nach der Anfrage, sondern der Master nimmt dieses wiederholte Senden erst nach Verzögerung wahr. Typischerweise beträgt diese Verzögerung einige ms. Der Grund dafür ist, dass üblicherweise in einem Netzwerk eine fehlerhafte Übertragung gleich von mehreren Slaves gleichzeitig erfahren wird. Entsprechend werden sich auch mehrere Slaves mit einer Anforderung beim Master melden. Die Slaves werden nun derart programmiert, dass sie die Anforderungen in gestaffelter Weise absetzen (dies kann einem programmierten Zeit-Schema entsprechen oder aber auch entsprechend zufällig generierter Zeitunterschiede zwischen den Anfragen). Wartet nun der Master mit seiner entsprechenden Korrektur-Datenübertragung, bis sämtliche Slaves, bei denen eine fehlerhafter Eingang festgestellt wurde, ihre Anforderung abgesetzt haben, so kann verhindert werden, dass identische Anforderungen mehrfach über das Netzwerk geschickt werden.

Ausserdem wird vorzugsweise so vorgegangen, dass ein Slave nur dann einen Retry-Request absetzt, solange er nicht eine bestimmte Anzahl (wenigstens einer) von gleichen Requests von anderen Wiedergabegeräten resp. Slaves im Netz beobachtet hat. Dies entspricht einer Repetition (einfach von mehreren Geräten ausgeführt) und gewährleistet eine höhere Datensicherheit. Ausserdem werden vorzugsweise vom Slave nur dann respektive nur solange derartige Retry-Requests abgesetzt, als er sich sicher ist, dass das angefragte Datenpaket noch rechtzeitig vom Master übermittelt und anschliessend vom Slave abgespielt werden kann. Ist diese Bedingung nämlich nicht mehr erfüllt, muss der Slave ohnehin neu auf den Datenstrom aufsetzen, da sein Puffer leerläuft, bevor die erforderlichen Daten vom Master zur Verfügung gestellt werden können. Werden ohne Berücksichtigung dieser Bedingung Retry-Requests immer weiter abgesetzt, so resultiert eine unnötige Last auf dem Netz.

Alternativ und insbesondere bei kurzen fehlenden Datenabschnitten ist es in einer derartigen Situation, d. h. wenn der Slave feststellt, dass sein Datenvorrat für eine kontinuierliche Wiedergabe ungenügend ist, möglich, nicht abzubrechen und erneut auf den Datenstrom aufzusetzen, sondern vielmehr in jenem Zeitabschnitt, in welchem die Daten nicht zur Verfügung stehen (Loch im Puffer) die Wiedergabe kurz auszublenden.

Der Master schickt das entsprechende Korrektur-Datenpaket nach der Wartezeit mit einem broadcast oder multicast nochmals auf das Netz, und sämtliche Slaves, die dieses Paket brauchen, können es in ihren Ringpuffer einbauen. Ausserdem sollten die Slaves auf dem Netz mithören, ob Korrektur-Anfragen, wie sie sie gerade abzusetzen beabsichtigen, bereits an den Master gegangen sind. Ist dies der Fall, so verzichtet der Slave auf eine weitere Anfrage, da ja das entsprechende Korrekturpaket ohnehin vom Master in einem multicast zur Verfügung gestellt werden wird.

Eine weitere Verbesserung der Koordination und insbesondere der Steuerung zwischen Master und Wiedergabegeräten resp. Slaves kann erreicht werden, indem in den Datenströmen oder Datenpaketen wenigstens ein Kommando zusammen mit einem zugehörigen Ausführungszeitpunkt an die Wiedergabegeräte übermittelt wird.

Beispielsweise können dabei Kommandi wie Pause, Play, Stop, etc. übergeben werden. Bevorzugt sollte der Ausführungszeitpunkt so gewählt werden, dass zwischen der Übergabe des Kommandos an das Netzwerk und dem Ausführungszeitpunkt wenigstens die längste im Netzwerk festgestellte Netzwerkverzögerungszeit zwischen Master und Wiedergabegerät verstreichen kann. So kann sichergestellt werden, dass beim Ankommen des Kommandos beim jeweiligen Wiedergabegerät der Ausführungszeitpunkt noch nicht in der Vergangenheit liegt.

Diese maximale Netzwerkverzögerungszeit kann beispielsweise vom Master von Zeit zu Zeit ermittelt und anschliessend abgelegt werden. Typischerweise kann zu dieser maximalen Netzwerkverzögerungszeit sicherheitshalber noch ein zusätzlicher Beitrag hinzugefügt werden, beispielsweise im Bereich von 1 - 20 ms. Dieser zusätzliche Beitrag dient dazu, die Netzwerkübertragungstoleranz (Sicherheitsmarge) und die Verarbeitungszeit im Sender und Empfänger abzudecken. Diese maximale Netzwerkverzögerungszeit sollte dynamisch angepasst werden, da sich diese maximale Netzwerkverzögerungszeit auf Grund von Veränderungen im Netz stark ändern kann. So ändert sich diese charakteristische Zeit beispielsweise, wenn die Last auf dem Netzwerk ansteigt (typischerweise Zunahme der maximalen Netzwerkverzögerungszeit), oder wenn weitere Wiedergabegeräte oder andere Geräte zugeschaltet oder abgeschaltet werden.

Um die zeitraubende Ermittlung der Bitrate, mit welcher der Master die Datenströme oder Datenpakete auf dem Netzwerk bereitstellt, und welche das Wiedergabegerät benötigt, um die im Netzwerk auftretenden Verzögerungen zu berechnen, zu vermeiden, kann diese Bitrate gleich in den Datenströmen oder Datenpaketen des Masters übermittelt werden.

Vorzugsweise wird dann, wenn ein Wiedergabegerät neu auf einen bereits ablaufenden Stream aufgeschaltet werden soll (beispielsweise beim neuen Zuschalten eines Gerätes oder wenn ein Datenverlust trotz Retry-Request zu einem irreparablen Leeerlaufen des Puffers geführt hat), so vorgegangen, dass ein zugeschaltetes Wiedergabegerät die aus dem Netzwerk empfangenen Datenströme oder Datenpakete unmittelbar, d. h. vom ersten Byte an, das empfangen wird, an seinen Codec übergibt. Der Codec des Wiedergabegerätes verwirft zunächst die eingespeisten Daten in Stummschaltung, bis ein erster gültiger Frame detektiert wird. Der Codec wird anschliessend unter Vermerkung des aktuellen Bytes (welches nicht unbedingt das erste Byte des entsprechenden Frames sein muss) angehalten. Im Augenblick, wenn dieses aktuelle Byte auf dem Master gespielt wird, wird der Codec im Wiedergabegerät dann wieder aufgeschaltet und verarbeitet den Datenstrom respektive die Datenpakete unter Wiedergabe. Wenn der Stream zum Codec nach Erreichen des ersten gültigen Frames gestoppt wird, und danach gleichzeitig mit dem Master die Wiedergabe (Streaming) gestartet werden soll, so muss berücksichtigt werden, dass der Puffer im Codec des Wiedergabegerätes (Slave) in diesem Moment nicht voll ist, d. h. zum Beispiel halb leer ist. Dies bedeutet, dass zu Beginn die Daten viel schneller zum Codec gesendet werden, weil dieser seinen Puffer auch immer möglichst voll haben will. Entsprechend muss etwas später mit der Wiedergabe (Streaming) losgelegt werden, da der Slave dann den Master durch das schnellere Füllen ja aufholt.

Durch dieses Abwarten des ersten gültigen Frames im Codec kann vermieden werden, dass der in der Regel langsamere Prozessor im Wiedergabegerät den Stream, d. h. Datenstrom respektive die Datenpakete, parsen, d. h. analysieren und zerlegen muss, und der Codec wird dazu verwendet, auf den Stream aufzusetzen. Wenn der Master einen neuen Stream beginnt, ist ein derartiges Verfahren typischerweise nicht erforderlich.

Das vorgeschlagene Verfahren erlaubt auch den Betrieb von Baumstrukturen. Eine derartige kaskadische Synchronisation kann dadurch erreicht werden, dass wenigstens eines der Wiedergabegeräte seinerseits als Master für ein Sub-Netzwerk (z.B. LAN) eingesetzt wird. Bevorzugt werden dann entsprechende Repetitionen an den obersten Master (Root-Master) weitergegeben. So lassen sich beliebig viele Wiedergabegeräte synchronisieren, und jedes der Wiedergabegeräte kann seinerseits als Repeater (Wiedergabegerät, dass sowohl als Slave als auch als Master aktiv ist) verwendet werden. Grundsätzlich ist es so auch möglich, einen derart als Master wirksamen Slave in ein anderes Netzwerk aussenden zu lassen. Für den Root-Master resultieren anschliessend natürlich veränderte maximale Netzwerkverzögerungszeiten, welchen dann entsprechend Rechnung getragen werden muss. Es kann so eine sehr effiziente und gegebenenfalls weitläufige Replikation des Datenstroms realisiert werden.

Wenigstens eines der Wiedergabegeräte kann dabei vorteilhafterweise über einen Speicher verfügen, welcher Audio-Daten bereitstellt. Es kann sich bei diesem Speicher beispielsweise um ein Laufwerk (CD, DVD oder ähnliches) handeln, in welchem ein entsprechend beschriebenes Medium bereitgestellt wird. Alternativ kann es sich beim Speicher um einen internen beschreibbaren oder nur lesbaren Speicher handeln. Dieser Speicher wird als Quelle von Audio-Daten verwendet. Der Inhalt dieser Audio-Daten kann gegebenenfalls vom Master oder von einer anderen Datenquelle (denkbar ist auch ein Tuner zum Empfang von Radio-Input) bezogen werden.

Weitere bevorzugte Ausführungsformen des erfindungsgemässen Verfahrens sind in den abhängigen Ansprüchen beschrieben.

Weiterhin betrifft die vorliegenden Erfindung ein Datenverarbeitungsprogramm zur Durchführung eines Verfahrens, wie es oben beschrieben ist, sowie ein Wiedergabegerät zur Durchführung eines derartigen Verfahrens. Das Wiedergabegerät verfügt dabei vorzugsweise über ein Netzwerkinterface (respektive allgemeiner über eine Kommunikationsschnittstelle), über eine zentrale Rechnereinheit mit Speicher, sowie über Mittel zur wenigstens mittelbaren Ausgabe von analogen oder digitalen Daten, insbesondere in Form eines Lautsprechers. Im Speicher eines derartigen Wiedergabegeräts ist ein Datenverarbeitungsprogramm zur Durchführung dieses Verfahrens fest programmiert ist, und dieses Programm aktiviert sich nach Einschaltung der Speisung selbsttätig, wobei das Wiedergabegerät insbesondere bevorzugt über Mittel zur automatischen Integration des Geräts in das Netzwerk verfügt.

Weitere bevorzugte Ausführungsformen sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:

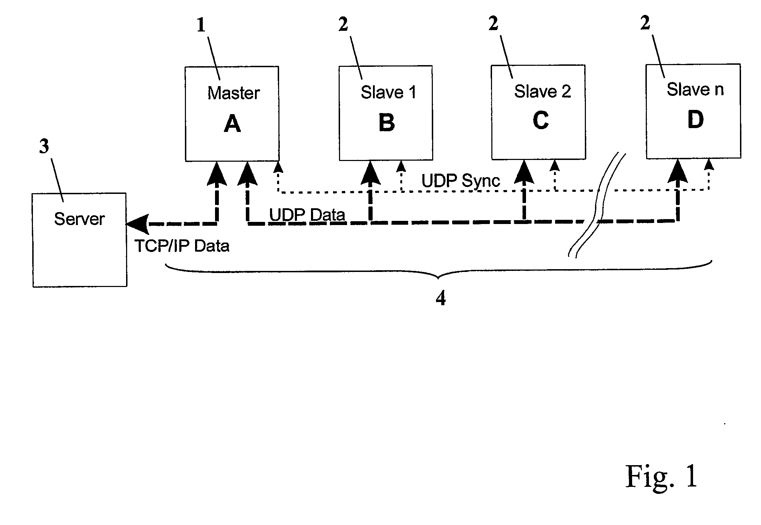

- Fig. 1: eine schematische Darstellung eines Systems mit synchronisierten Wiedergabegeräten; und
- Fig. 2: a) eine schematische Darstellung des Ringpuffers auf einem Slave und b) eine schematische Darstellung des Ringpuffers auf einem Master.

### WEGE ZUR AUSFÜHRUNG DER ERFINDUNG

Als Ausführungsbeispiel zur vorliegenden Erfindung soll ein System beschrieben werden, bei welchem eine "Sendeeinheit" einen von einer (digitalen oder analogen) Audio-Datenquelle angelieferten kontinuierlichen Datenstrom drahtlos an mehrere verteilte Wiedergabegeräte (typisch Aktivlautsprecher) verteilt, wobei diese verschiedene Kanäle des gleichen Datenstromes decodieren und ausgeben. Die Sendereinheit verfügt dazu über eine CPU, d. h. einen Prozessor, Pufferspeicher, sowie über mindestens eine bidirektionale Kommunikationsschnittstelle, im beschriebenen Beispiel ein 802.11b Funknetzwerkinterface, sowie einen Audioeingang für analoge oder digitale Audiodaten sowie selber über einen Audioausgang (ist also auch Wiedergabegerät). Die anderen Wiedergabegeräte verwenden die gleiche Architektur, besitzen aber statt einem Audioeingang einen digitalen und/oder analogen Audioausgang und eventuell Leistungsverstärker und Schallwandler/Lautsprecher.

In der nun folgenden Beschreibung werden Bezeichnungen verwendet, die wie folgt definiert sein sollen:
- Der Server ist eine Datenquelle für Audiodaten und kann ein beliebiges Gerät zur Bereitstellung der Daten sein. Es kann sich dabei z. B. um einen Server eines Content-Providers handeln, oder aber auch um einen einfachen Musik- oder Video-Server. Insbesondere ist auch eine digitale Eingangsschaltung (z.B. S/PDIF), eine Analog/Digitalwandlung und/oder ein Codec, der einen Datenstrom komprimiert/codiert (typisch ein digitaler Signalprozessor), als "Server" zu betrachten.
- Wiedergabegerät: ein Gerät zur Wiedergabe des Medienstromes, das die hier beschriebenen Protokolle unterstützt.
- Master: ein Wiedergabegerät, das von einem anderen Gerät eine Aufforderung bekommen hat, den gerade spielenden Datenstrom weiterzureichen.
- System: eine Menge von mindestens zwei Wiedergabegeräten, die in einer gemeinsamen Kommunikationsstruktur installiert sind.
- Slave: ein Teilnehmer, der per Userinterface oder Kommando oder Festeinstellung/Parametrierung dazu aufgefordert wurde, synchron zu einem anderen Wiedergabegerät ("Master") zu spielen.
- Es können mehrere Slaves den gleichen Datenstrom synchron abspielen. Daher werden die Slaves zur Kennzeichnung mit Nummern versehen.

### Normalbetrieb ohne Synchronisation:

Alle Wiedergabegeräte arbeiten autonom. Die Wiedergabegeräte können alle unabhängig voneinander Mediendaten von einer gemeinsamen oder von unterschiedlichen Datenquellen ausgeben. Die Datenquellen können dabei im Netzwerk angeordnet sein, oder aber es kann sich oben bereits auf den Wiedergabegeräten gespeicherte Daten handeln.

### Automatisches Erkennen und Suchen von Teilnehmern:

Jedes Wiedergabegerät enthält einen "Discovery Server", der bei Eintreffen eines bestimmten Netzwerkblockes (UDP Datagramm auf eine spezifische Portnummer, UDP ist ein standard, low-overhead, verbindungsloses, host-to-host Protokoll, welches den Austausch von Datenpaketen über geschaltete Computernetzwerke erlaubt. Es erlaubt einem Programm auf einem Computer, ein Datagramm an ein Programm auf einem anderen Computer zu schicken) mit einem Antwortblock reagiert. Alternativ können andere Discovery-Protokolle, so z.B. SSDP (Simple Service Discovery Protocol, ein Unterprotokoll von UPNP, Universal plug and play ist ein Standard, welcher dazu verwendet wird, eine direkte und automatische Anbindung von Peripheriegeräten in einem lokalen Netzwerk ohne Konfiguration zu erlauben) benutzt werden.

Mit Hilfe des Suchprotokolls verschafft sich jedes Wiedergabegerät eine Liste von anderen Wiedergabegeräten, deren konfigurierten Namen, insofern verfügbar, und deren Netzwerkadressen (IP Adresse). Diese Suche wird immer wieder wiederholt, so dass Ergänzungen der Liste durch neu hinzugekommene Geräte automatisch erfolgen. Nicht mehr vorhandene Geräte werden nach einer bestimmten Zeit wieder aus der Liste entfernt.

Eine beispielsweise in Form einer Homepage organisierte Software erlaubt es anschliessend, sämtliche in einem Netzwerk vorhandenen Wiedergabegeräte über Anfrage bei einem spezifischen Wiedergabegerät innerhalb des Netzwerks sichtbar zu machen. Dazu ist kein Installationsaufwand notwendig, die entsprechende Software visualisiert automatisch sämtliche Teilnehmer und stellt die Möglichkeit zur Verfügung, einzelne Teilnehmer an anderer in synchronisierter Weise anzubinden (z. B. über ein auslösen via cgi-Kommando). So ist ein einfaches Handling sichergestellt.

### Aufforderung zur Synchronisation:

Ein Teilnehmer kann durch verschiedene Einflüsse stimuliert werden, sich mit einem anderen Gerät zu synchronisieren und dessen Medienstrom wiederzugeben:
1. durch fixe Konfiguration ("Setup"). Ein solcher Teilnehmer versucht sich konstant auf den konfigurierten Master zu synchronisieren.
2. durch Kommando von einer Applikation (z.B. per cgi Kommando, vgl. oben)
3. durch Empfang eines Kommandos über UDP - auch der Fall "ALLE" synchronisieren auf Teilnehmer xxxx ist machbar
4. durch Aktion des Benutzers und Auslösen via User Interface

Wird ein Teilnehmer stimuliert, sich mit einem anderen zu synchronisieren, passiert das folgende:

### Zeitsynchronisation:

Slave-Geräte müssen sehr genau mit dem Master synchronisieren. Hierzu ist eine genaue Synchronisation einer gemeinsamen Zeitbasis notwendig. Es ist nicht notwendig, dass diese "Master-Slave-Systemzeit" irgendeinen Bezug zu anderen Systemen wie z.B. der Weltzeit hat, auch ist die Genauigkeit (Laufgeschwindigkeit) dieser Zeit unerheblich - solange beide Geräte möglichst genau synchron laufen.

Die Zeitsynchronisation der Wiedergabegeräte muss periodisch wiederholt werden, um Abweichungen über die Zeit zu korrigieren. Der Ablauf einer Zeitsynchronisation geschieht dabei ähnlich einem aus der Bereich der Zeitanpassung bekannten Protokoll, nämlich ntp (network time protocol). Dabei handelt es sich um ein Protokoll zur Synchronisation der Uhren auf Computern eines Netzwerks.

Im vorliegenden Fall wird wie folgt vorgegangen:

Der verwendete Ansatz ist das Anfordern der Zeit beim Server unter Berücksichtigung der durchschnittlichen Laufzeit der Daten. Das Gerät selbst nimmt seine aktuelle Zeit und misst die Dauer bis zur Antwort vom Server. Diese Antwort enthält die aktuelle Serverzeit zum Zeitpunkt des Eintreffens der Anfrage. Wird dieser Vorgang mehrfach durchgeführt, können geringfügige Schwankungen in den Datenlaufzeiten ausgeglichen werden:
a) Slave schickt UDP Datagramm an den Teilnehmer auf den er synchronisieren will, und fordert dessen aktuelle Zeit an. In dem Telegramm wird die "eigene" Zeit mitgegeben (Sendezeit)
b) Das Telegramm wird vom Empfänger mit der lokalen (Master-) Zeit versehen, wobei die "Slave"-Sendezeit erhalten bleibt, und an den Slave zurückgeschickt.
c) Der Slave empfängt das vom Master zurückgesendete Telegramm und trägt es in eine Tabelle ein, wobei die Empfangszeit notiert wird.
d) Die Schritte a-c passieren mehrmals (bei der ersten Synchronisation z. B. mind. 8x, bei Resynchronisation 3x), mit dem Ziel, per Durchschnittsbildung unter Weglassen von Extremwerten ein möglichst genaues Ergebnis zu bekommen.
e) Sind genügend aussagekräftige Daten in der Tabelle vorhanden, wird ausgewertet. Hierzu wird die Differenz (aktuelle Slavezeit minus Slave-Sendezeit) eines jeden Telegrammes gebildet und geprüft, ob das Telegramm lange unterwegs war (grosse Differenz). Nur die Telegramme mit der kleinsten Differenz werden genommen, und es kann im Normalfall angenommen werden, dass bei gleichen Geräten die Übertragungszeit in etwa symmetrisch auf beide Übertragungsstrecken entfällt. Hierdurch kann eine von der normalen Slavezeit unabhängige "Masterzeit" im Slave sehr genau auf den Master synchronisiert werden.

Auf normalem Ethernet und sogar auf 802.11 Wireless Netzwerken sind die Übertragungszeiten im unbelasteten Zustand typisch kleiner als 1ms auf jeden Fall unter 5 ms, und bei Annahme der "symmetrischen" Verzögerung kann die Zeitsynchronisation der Teilnehmer mit dem beschriebenen Verfahren auf deutlich weniger als 1ms sichergestellt werden.

Somit wird also eine durchschnittliche Laufzeit der Daten innerhalb eines möglichst kurzen Zeitabschnittes ermittelt. Abzüglich einer geschätzten oder empirisch ermittelten Konstante von 0,01-1ms für die unterschiedliche Verarbeitungszeit beim Senden und Empfangen der Daten innerhalb der Geräte kommt man nun auf eine momentane Laufzeit für ein Datenpaket. Diese Laufzeit wird nun bei der Ermittlung der aktuellen Systemzeit berücksichtigt.

Die Zeitsynchronisation wird dann in regelmässigen Abständen wiederholt, typ. alle 30 Sekunden, wobei ein Zeitstempel im Weiterleitungsprotokoll zur Überwachung in der Regel genügt und damit die Resynchronisation nur bei deutlichen Diskrepanzen ausgelöst wird.

### Datensynchronisation:

Allgemeines: Um die Synchronisation von "N" Slaves auf einen Master ohne "N"-fache Datenmenge auf dem Netzwerk zu bewerkstelligen, ist es im Sinne einer möglichst geringen erforderlichen Bandbreite auf dem Netzwerk vorteilhaft, die Streamingdaten vom Master per Multicast/Broadcast zu verteilen. Broadeast/Multieast ist nicht "sicher", d.h. Daten können verloren gehen. Es wird also ein Wiederholungsmechanismus benötigt. Die Anforderung von Wiederholungen kann unidirektional - mit direkter Adressierung - erfolgen.

Um mehrere unabhängige Synchronisationsgruppen (Kanäle) einfach und automatisch einzurichten, sollte für die Datenverteilung pro Kanal eine unterschiedliche Portnummer benutzt werden. Es ist dadurch mit hoher Wahrscheinlichkeit sichergestellt, dass in der beschriebenen Implementierung jeder Teilnehmer eine individuelle Portnummer aus seiner IP Adresse und einer Konstanten ableitet. Es werden die letzten 12 Bit der IP Adresse plus eine Konstante (z.B. 40.000) addiert. Eine solche Portnummer ist in einem typischen Netzwerk mit Class C Adressierung garantiert eindeutig.

Die individuelle Portnummer eines jeden Teilnehmers wird bei dem "Discovery" Protokoll mit übermittelt, und jeder Teilnehmer kennt daher die "Kanalnummer" eines jeden potentiellen Masters.

Anmeldung: Nachdem die Zeitsynchronisation hergestellt ist (siehe oben), fordert der Slave das Wiedergabegerät, dessen Datenstrom er synchronisiert wiedergeben will, auf, die "Master"-Rolle zu übernehmen. Dies geschieht durch Senden eines Kommandos (SYNC_REQ) auf den (Master)-spezifischen UDP Port/Kanal. Eine Quittung vom Master bestätigt den Empfang des Kommandos, bei Nichtbestätigung wiederholt der Slave das Kommando, notfalls mehrfach.

Streaming: Der Master empfängt die Streamingdaten z.B. von einem Server, typischerweise per tcp Verbindung, eventuell per http, oder auch von einer lokalen digitalen oder analogen Schnittstelle, Codec o.ä.. Die Funktion des Systems ist von der eingesetzten Datenquelle völlig unabhängig. Alle eingehenden Daten werden in einen Ringpuffer eingeschrieben. Bei jedem "Start" eines Streams wird ein Bytezähler (32bit) zurückgesetzt. Jedes eingehende Byte vom Server wird gezählt und hat so eine eindeutige "Adresse".

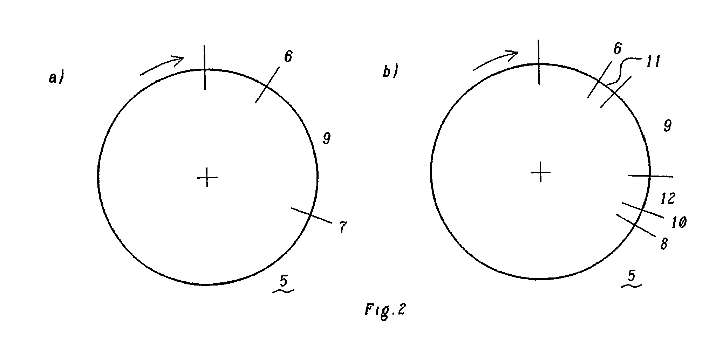

Der Master schickt in einem vom Empfangen des tcp Stromes unabhängigen Prozess die Daten des Ringpuffers blockweise, sofort nach Eintreffen, per UDP Broadcast auf das Netzwerk, ergänzt durch einen Protokollheader, der unter anderem die "Adresse" des ersten übermittelten Bytes, die genaue Masterzeit, die Adresse des vom Master als nächstes an den Codec zu übermittelnden Bytes etc enthält. Dies ist in Fig. 2b) dargestellt. Der Ringpuffer 5 ist ständig mit Daten gefüllt. Der Ausgabepointer 6 steht an einer bestimmten Stelle und schickt die dort gelesenen Daten an den lokalen Codec/Wandler zur Wiedergabe. Der Ausgabepointer 6 verschiebt sich entsprechend der internen Uhr des Master vorwärts (vgl. Pfeilrichtung). Der Dateneingangspointer 8 zeigt diejenige Position an, an welcher gerade die von einem Server empfangenen Daten in den Ringpuffer 5 eingelesen werden. im wesentlichen unmittelbar "dahinter" in Leserichtung befindet sich der Datenweitergabepointer 10, welcher die Position angibt, an welcher die im Ringpuffer 5 vorhandenen Daten vom Master an die Slaves über ein Multicast/Broadcast weitergegeben werden. Mit dem Bezugszeichen 12 ist dabei ein typisches Datenpaket angegeben. Im Ringsspeicher 5 befindet sich entsprechend ein " Datenvorrat " 9, von welchem der wesentliche Teil für ggf. notwendige "retry-protokolle" zur Verfügung steht (vgl. weiter unten). Typischerweise umfasst dieser Datenvorrat ca. 1 bis 4 Sekunden Daten. Nicht mehr für Korrekturprotokolle zur Verfügung steht der Sicherheitsbereich unmittelbar vor dem Ausgabepointer 6, da dieser nicht mehr sinnvoll übergeben werden kann.

Der Slave empfängt diese Datagramme und trägt die empfangenen Daten seinerseits in einen Ringpuffer 5 ein. Der Protokollheader wird direkt ausgewertet, und zwar wird die Masterzeit auf Genauigkeit überprüft, und die Information "Masterzeit/Aktuelles Byte" (steht für den aktuellen Abspielmoment) wird zwischengespeichert, respektive dazu verwendet, den Ausgabepointer 6 an den richtigen Ort zu schieben respektive dessen Laufcharakteristik anzupassen. Der Ringpuffer 5 vom Slave ist in Fig. 2a) dargestellt. Der Dateneingangspointer 7 befindet sich an der Position des Datenweitergabepointers 10 des Master (unter Berücksichtigung natürlich der Laufzeit über das Netzwerk), und idealerweise befindet sich der Datenausgabepointer 6 an der identischen Stelle wie beim Master.

Typischerweise sollte, um Datenverluste zu vermeiden respektive um ein ggf. erforderliches "ziehen" zu ermöglichen, der Ringpuffer auf den Slaves grösser sein als jene auf dem Master. Es ist nebenbei bemerkt auch möglich, die Position des aktuellen Byte, welches vom Master auf den Codec geschickt wird, indirekt über den für Zustand des Ringpuffers zu ermitteln. Sind Ringpuffer von Master und Slave gleich voll, so ist die Synchronisation in Ordnung. Ist der Ringpuffer von einem Slave weniger gefüllt oder voller als jene des Masters, so zeigt dies eine entsprechende Verschiebung der Ausgabe an.

### Retry-Protokoll (Korrekturmechanisms):

Der Slave kann einfach feststellen, ob ein Datenpaket verloren gegangen ist. Dies ist genau dann der Fall, wenn ein neues Datenpaket empfangen wird, dessen erstes Byte nicht eine konsekutive Adresse hat (Datenlücke).

Wenn ein Datenpaket verloren geht, geschieht dies typischerweise auf dem Netzwerk und in der Regel für mehrere oder alle Slaves im "Kanal". Um unnötige Belastung des Netzwerkes zu vermeiden, wird ein intelligentes Retryverfahren eingesetzt. Alle Slaves empfangen das "neue" Datenpaket zum etwa gleichen Zeitpunkt und können daher etwa gleichzeitig feststellen, dass Daten verloren gegangen sind. Jeder Client verzögert jetzt eine individuelle Zeit (Zufallsgesteuert oder per Algorithmus aus der IP Adresse oder MAC Adresse abgeleitet), im Bereich 1 bis z.B. 30ms, bevor er eine "Retry-Anforderung" aussendet. Diese Retry-Anforderung wird dann per Broadcast auf den für den "Kanal" spezifischen UDP Port geschickt, und kann so von allen auf den Kanal aufgeschalteten Teilnehmern - nicht nur dem Master - empfangen werden. Während die Clients, die einen Retry auslösen wollen, die individuelle Zeit warten, wird der Empfang von UDP Datagrammen fortgesetzt. Ein von einem anderen Client ausgelöster Retry beendet das Warten und verhindert das Aussenden des eigenen Retries, wenn es sich um die gleiche (gleiche erste nicht vorhandene Byteadresse) oder eine Anforderung nach noch mehr Daten handelt - hierdurch werden mehrfache identische Retryanforderungen wirkungsvoll verhindert und die Last auf dem Netzwerk minimiert.

Stellt ein Slave fest, dass der Datenverlust im Rahmen der zur Verfügung stehenden Zeit ohnehin durch den Master mit einem erneuten Senden nicht mehr ausgeglichen werden kann, so beendet er seine Retry-Requests. So kann vermieden werden, dass unnötige Retry-Requests, welche das Netz nur belasten, ohne dem Slave anschliessend Nutzen zu bringen, weiter abgesetzt werden. Anschliessend kann ein Slave entweder bis zum letzten zur Verfügung stehenden Byte abspielen und dann erneut auf den Datenstrom aufsetzen, oder, und dies ist insbesondere bei kurzen Abschnitten mit Datenverlust ggf. durchaus sinnvoll, er unterbricht die Wiedergabe innerhalb des Fensters, dessen Daten nicht zur Verfügung stehen.

Auf der Seite des Masters wird, wenn ein Retry eintrifft, für eine bestimmte Zeit (z.B. 30 ms, gleich wie die maximale Client-Verzögerung plus max. interne Verarbeitungszeit für eingehende Datenblöcke) gewartet, bevor mit der Wiederholung der Aussendung begonnen wird. Mit dieser Verzögerung kann verhindert werden dass ein Retry ab einer bestimmten Stelle begonnen wird, dann aber noch eine Retryanforderung auf eine frühere Stelle einläuft.

Grundsätzlich werden alle Daten ab der angeforderten Stelle bis zum Ende des Master-Streamingbuffers wiederholt.

Slaves ignorieren alle eingehenden Daten die sie schon "kennen", wobei dies nicht blockspezifisch, sondern "bytespezifisch" ausgeführt wird - ein Retryblock kann teilweise alte und teilweise neue Daten enthalten.

### Wiederaufsetzen:

Es kann passieren, dass ein Slave durch massive Empfangsstörung über längere Zeit keine Daten empfangen hat und damit einen "Underrun" produziert, d.h. der Streamingbuffer wird leer. In diesem Falle werden keine Retries mehr angefordert, sondern der Slave synchronisiert sich wieder komplett neu gemäss dem beschriebenen Verfahren. In diesem Falle muss die Ausgabe des Mediastromes auf dem Slave für einen kurzen Zeitraum unterbrochen werden.

### Aufsetzen auf einen laufenden Datenstrom:

Slaves können jederzeit auf einen laufenden Datenstrom aufsetzen, ein synchroner Start ist nicht notwendig. Dies geschieht mittels der folgenden Methode:
1) der Slave füllt den Streamingpuffer mit den auf dem Kanal übertragenen Daten
2) der Slave verfolgt die vom Master in den Broadcasts mit übermittelten Adressen der aktuell ausgegebenen Bytes
3) zusätzlich kann der Slave mit spezifischen Abfragen vom Master genau erfahren, welches Byte (Adresse) dieser gerade an den Codec ausgegeben hat.
4) Es wird die Adresse des ersten in den Streamingbuffer eingeschriebenen Bytes mit der vom Master übermittelten aktuellen Ausgabeadresse verglichen. Sind diese gleich oder hat der Master bereits mehr Daten ausgegeben, wird sofort mit der Wiedergabe begonnen.

### Feinabgleich:

Durch regelmässige Abfrage des Masters (analog der Zeitsynchronisation, implementiert in den gleichen Datenblöcken wie die Zeitsynchronisation) kann festgestellt werden ob der Client gegenüber dem Master eher "hinterherläuft" oder "vorwegläuft", und zwar sehr einfach durch Differenzbildung der aktuell an den Codec ausgegebenen Byteadressen. Diese Daten müssen natürlich über die Zeit gemittelt werden.

Ist der Client im Streamingbuffer bereits weiter als der Master, kann der Codec durch leichte Verlangsamung der Clockfrequenz etwas gebremst werden bis genaue Synchronisation erreicht ist. Analog wird die Codec-Clockfrequenz leicht angehoben wenn der Client im Mittel dem Master hinterherläuft.

### Beenden des Master Modus:

Der Master kann die Notwendigkeit des Aussendens von Daten - also die Masterrolle - dadurch überprüfen, dass Aktivität von Slaves, zumindest zur Zeitsynchronisation, besteht. Wird über einen längeren Zeitraum (mindestens 3x Abfrageintervall Zeitsynchronisation) keine Clientaktivität mehr registriert, kann der Master wieder in den normalen Teilnehmermodus wechseln und das Aussenden der Broadcasts beenden.

### BEZUGSZEICHENLISTE

- 1: Wiedergabegerät (Master)
- 2: Wiedergabegerät (Slave)
- 3: Daten-Server
- 4: Netzwerk
- 5: Ringpuffer für Daten
- 6: Datenausgabepointer (Slave/Master)
- 7: Dateneingangspointer (Slave)
- 8: Dateneingangspointer (Master)
- 9: Datenvorrat
- 10: Datenweitergabepointer (Master)
- 11: Sicherheitsbereich
- 12: Datenpaket für Slaves

## Patentansprüche

1. Verfahren zur Wiedergabe von über wenigstens ein Netzwerk (4) übertragenen Datenströmen oder Datenpaketen mittels wenigstens zweier wenigstens mittelbar an das Netzwerk (4) angebundener Wiedergabegeräte (1,2),
**dadurch gekennzeichnet, dass**
zur Synchronisation der Wiedergabe mit den wenigstens zwei Wiedergabegeräten (1,2)
eines der Wiedergabegeräte als Master (1) seine interne Uhr als Referenz vorgibt und die anderen Wiedergabegeräte (2) als Slave ihre interne Uhr über das Netzwerk (4) mit jener des Masters (1) abgleichen oder eine Kopie der Master-Uhr führen und die Wiedergabe von Datenströmen oder Datenpaketen in Abhängigkeit dieser abgeglichenen Uhr respektive der Kopie der Master-Uhr wiedergeben.

2. Verfahren nach Anspruch 1, **dadurch gekennzeichnet, dass** es sich beim Netzwerk (4) um ein Netzwerk (4) handelt, in welchem Datenpakete in asynchroner Weise oder synchroner Weise übertragen werden.

3. Verfahren nach einem der vorhergehenden Ansprüche, **dadurch gekennzeichnet, dass** der Abgleich der Uhr auf dem Slave (2) vor der ersten Wiedergabe geschieht, und insbesondere bevorzugt periodisch während der Wiedergabe aktualisiert wird.

4. Verfahren nach Anspruch 3, **dadurch gekennzeichnet, dass** die periodische Aktualisierung dazu verwendet wird, auf dem Slave (2) eine systematische Anpassung der Laufgeschwindigkeit der internen Uhr des Slave (2) an jene des Masters (1) zum Ausgleich von Unterschieden in der internen Laufzeitcharakteristik von Master (1) und Slave (2) vorzunehmen.

5. Verfahren nach Anspruch 4, **dadurch gekennzeichnet, dass** die systematische Anpassung darin besteht, die interne Uhr des Slave (2) mit einem konstanten Korrekturfaktor zu skalieren.

6. Verfahren nach einem der vorhergehenden Ansprüche, **dadurch gekennzeichnet, dass** der Abgleich der internen Uhr erfolgt, indem die interne Uhr des Master (1) vom Slave (2) insbesondere bevorzugt mehrmals abgefragt wird, und indem wenigstens ein, bevorzugt eine Mehrzahl von Datenpaketen, welche mit den Paketen zur Abfrage der Zeit auf dem Master (1) identisch sein können, vom Slave (2) zum Master (1) übertragen und wieder zurückübermittelt werden, und die interne Uhr im Slave (2) in Abhängigkeit einer insbesondere durchschnittlichen Laufzeit von Datenpaketen zwischen Master (1) und Slave (2) an die Uhr im Master (1) angeglichen wird.

7. Verfahren nach Anspruch 6, **dadurch gekennzeichnet, dass** die Laufzeit als Mittelwert unter Berücksichtigung der Bearbeitungszeiten in den Geräten (2) berechnet wird.

8. Verfahren nach einem der vorhergehenden Ansprüche, **dadurch gekennzeichnet, dass** das erste, mit der Wiedergabe beauftragte Wiedergabegerät (1,2) automatisch als Master (1) definiert wird.

9. Verfahren nach einem der vorhergehenden Ansprüche, **dadurch gekennzeichnet, dass** es sich bei den Datenströmen oder Datenpaketen um digitale Audio- oder Videodaten oder eine Kombination davon handelt, insbesondere um komprimierte oder unkomprimierte Audiodateien wie MP3, WAV, MPEG, Windows Media etc.

10. Verfahren nach Anspruch 9, **dadurch gekennzeichnet, dass** es auf den Wiedergabegeräten (1,2) entweder die gleichen Daten wiedergegeben werden, oder dass unterschiedliche Kanäle der Daten, insbesondere bei Audio-Dateien in Stereoformat oder Multikanal auf unterschiedlichen Wiedergabegeräten (1,2) wiedergegeben werden.

11. Verfahren nach einem der vorhergehenden Ansprüche, **dadurch gekennzeichnet, dass** wenigstens ein Teil der Datenströme oder Datenpakete vor der Wiedergabe in den Wiedergabegeräten (1,2) zwischengepuffert (5) werden, wobei bei Audiodateien typischerweise im Bereich von ca. 1 bis 5 sec gepuffert wird, und wobei insbesondere bevorzugt die Pufferung dynamisch und den Gegebenheiten des Netzwerks angepasst erfolgt.

12. Verfahren nach einem der vorhergehenden Ansprüche, **dadurch gekennzeichnet, dass** die Synchronisation der einzelnen Wiedergabegeräte (1,2) im Bereich von weniger als 100ms, bevorzugt von weniger als 10ms oder weniger als 2ms, und insbesondere bevorzugt von weniger als 1 ms erfolgt.

13. Verfahren nach einem der vorhergehenden Ansprüche, **dadurch gekennzeichnet, dass** es sich beim Netzwerk (4) um ein kabelloses Netzwerk, insbesondere ein Funknetzwerk handelt.

14. Verfahren nach einem der vorhergehenden Ansprüche, **dadurch gekennzeichnet, dass** während der Wiedergabe von wenigstens einem Wiedergabegerät (1,2) wenigstens ein weiteres synchronisiert zugeschaltet wird, indem sich das zugeschaltete Gerät (2) automatisch auf den vorhandenen Master (1) abgleicht und nach Pufferung eines Teils der Daten selber die Wiedergabe aufnimmt.

15. Verfahren nach einem der vorhergehenden Ansprüche, **dadurch gekennzeichnet, dass** die Datenpakete oder Datenströme entweder von einem separaten Datenserver (3) abgeholt werden, oder auf einem der Wiedergabegeräte (1) abgeholt werden, oder auf den Wiedergabegeräten (1,2) bereits zur Verfügung stehen, oder dem System über einen Analog-Digitalwandler und/oder eventueller Komprimier/Codiereinheit nach Einspeisung in analoger oder digitaler Form in digitaler Form zur Verfügung gestellt werden.

16. Verfahren nach einem der vorhergehenden Ansprüche, **dadurch gekennzeichnet, dass** die Datenpakete oder Datenströme von einer Datenquelle in einen Ringpuffer (5) im Master (1) eingelesen, wobei jedes eingelesene Byte mit einer eindeutigen Adresse versehen ist, und dass der Master (1) in einem vom Einlesen des Datenstromes in den Ringpuffer (5) unabhängigen Prozess die Daten des Ringpuffers (5) blockweise, insbesondere sofort nach Einlesen, per Broadcast, insbesondere per UDP Broadcast und weiterhin insbesondere per multicast, auf das Netzwerk schickt, ergänzt durch einen Protokollheader, der unter anderem die Adresse des ersten übermittelten Bytes, die genaue Masterzeit, die Adresse des vom Master (1) als nächstes an den Codec des Masters (1) zu übermittelnden Bytes enthält.

17. Verfahren nach Anspruch 16, **dadurch gekennzeichnet, dass** die Adresse des vom Master als nächstes an den Codec des Masters (1) zu übermittelnden Bytes wenigstens teilweise in unabhängigen Kontrollblöcken, welche mit den Kontrollblöcken zur Überprüfung der Uhr auf dem Master identisch sein können, übermittelt wird.

18. Verfahren nach einem der vorhergehenden Ansprüche, **dadurch gekennzeichnet, dass** zur Sicherung der Datenintegrität bei von einem Slave (2) festgestelltem Verlust eines Datenteils auf dem Netzwerk (4) dieses Datenteil nach Anforderung vom Slave (2) vom Master (1) wiederholt gesendet wird, wobei der Master (1) dieses wiederholte Senden erst nach Verzögerung, insbesondere im Bereich von einigen ms, vornimmt, und wobei die Slaves (2) die Anforderungen in gestaffelter Weise derart vornehmen, dass identische Anforderungen nur einmal über das Netzwerk geschickt werden.

19. Verfahren nach einem der vorhergehenden Ansprüche, **dadurch gekennzeichnet, dass** in den Datenströmen oder Datenpaketen wenigstens ein Kommando, beispielsweise ausgewählt aus der Gruppe Pause, Play, Stop, zusammen mit einem zugehörigen Ausführungszeitpunkt an die Wiedergabegeräte (1,2) übermittelt wird, wobei bevorzugt der Ausführungszeitpunkt so gewählt wird, dass zwischen der Übergabe des Kommandos an das Netzwerk (4) und dem Ausführungszeitpunkt wenigstens die längste im Netzwerk (4) festgestellte Netzwerkverzögerungszeit zwischen Master (1) und Wiedergabegerät (1,2) verstreichen kann.

20. Verfahren nach einem der vorhergehenden Ansprüche, **dadurch gekennzeichnet, dass** in den Datenströmen oder Datenpaketen die Bitrate des Masters (1) übermittelt wird, mit welcher der Master (1) die Datenströme oder Datenpakete auf dem Netzwerk (4) bereitstellt, wobei bevorzugt das Wiedergabegerät (1,2) diese Bitrate dazu verwendet, um die im Netzwerk auftretenden Verzögerungen zu ermitteln.

21. Verfahren nach einem der vorhergehenden Ansprüche, **dadurch gekennzeichnet, dass** ein zugeschaltetes Wiedergabegerät (1,2) die aus dem Netzwerk empfangenen Datenströme oder Datenpakete unmittelbar an den Codec übergibt, wobei dieser Codec die eingespeisten Daten in Stummschaltung verwirft, bis der Codec einen ersten gültigen Frame detektiert, der Codec anschliessend unter Vermerkung des aktuellen Bytes angehalten wird und der Codec im Wiedergabegerät dann wieder den Datenstrom respektive die Datenpakete verarbeitet und auf Wiedergabe geschaltet wird, wenn dieses aktuelle Byte auf dem Master (1) gespielt wird.

22. Verfahren nach einem der vorhergehenden Ansprüche, **dadurch gekennzeichnet, dass** wenigstens eines der Wiedergabegeräte (1,2) seinerseits als Master für ein Sub-Netzwerk eingesetzt wird, wobei bevorzugt entsprechende Repetitionen an den obersten Master weitergegeben werden.

23. Verfahren nach einem der vorhergehenden Ansprüche, **dadurch gekennzeichnet, dass** wenigstens eines der Wiedergabegeräte (1,2) über einen Speicher verfügt, welcher als Quelle von Audio-Daten verwendet wird, wobei der Inhalt dieser Audio-Daten gegebenenfalls vom Master (1) oder von einer anderen Datenquelle bezogen wird.

24. Datenverarbeitungsprogramm zur Durchführung eines Verfahrens nach einem der Ansprüche 1 bis 23.

25. Wiedergabegerät zur Durchführung eines Verfahrens nach einem der Ansprüche 1 bis 23, **dadurch gekennzeichnet, dass** es über ein Netzwerkinterface, über eine zentrale Rechnereinheit mit Speicher sowie über Mittel zur wenigstens mittelbaren Ausgabe von Daten, insbesondere in Form eines Lautsprechers, verfügt, **dadurch gekennzeichnet, dass** im Speicher ein Datenverarbeitungsprogramm nach Anspruch 24 fest programmiert ist, und dass sich dieses Programm nach Einschaltung der Speisung selbsttätig aktiviert, wobei das Wiedergabegerät insbesondere bevorzugt über Mittel zur automatischen Integration des Geräts in das Netzwerk verfügt.

## Claims

1. A method for reproducing data streams or data packets transmitted via at least one network (4) using at least two reproduction units (1, 2) which are at least indirectly linked to the network (4),
**characterized in that**
the reproduction using the at least two reproduction units (1, 2) is synchronized
by virtue of one of the reproduction units, as master (1), prescribing its internal clock as reference and the other reproduction units (2), as slaves, aligning their internal clock with that of the master (1) via the network (4) or carrying a copy of the master clock and reproducing data streams or data packets on the basis of this aligned clock or the copy of the master clock,respectively.

2. The method as claimed in claim 1, **characterized in that** the network (4) is a network (4) in which data packets are transmitted asynchronously or synchronously.

3. The method as claimed in one of the preceding claims, **characterized in that** the clock on the slave (2) is aligned before reproduction for the first time and, in particular, is updated preferably periodically during the reproduction.

4. The method as claimed in claim 3, **characterized in that** the periodic update is used on the slave (2) for systematically matching the speed of operation of the internal clock in the slave (2) to that of the master (1) in order to compensate for differences in the internal propagation-time characteristics of master (1) and slave (2).

5. The method as claimed in claim 4, **characterized in that** the systematic matching involves scaling the internal clock in the slave (2) using a constant correction factor.

6. The method as claimed in one of the preceding claims, **characterized in that** the internal clock is aligned by virtue of the internal clock in the master (1) being requested by the slave (2), particularly preferably a plurality of times, and by virtue of at least one, preferably a plurality of data packets, which may be identical to the packets for requesting the time on the master (1), being transmitted from the slave (2) to the master (1) and being sent back, and the internal clock in the slave (2) being brought into line with the clock in the master (1) on the basis of a propagation time, particularly an average propagation time, for data packets between master (1) and slave (2) .

7. The method as claimed in claim 6, **characterized in that** the propagation time is calculated as a mean taking into account the handling times in the units (2).

8. The method as claimed in one of the preceding claims, **characterized in that** the first reproduction unit (1, 2) which has the task of reproduction is automatically defined as master (1).

9. The method as claimed in one of the preceding claims, **characterized in that** the data streams or data packets are digital audio or video data or a combination thereof, particularly compressed or uncompressed audio files such as MP3, WAV, MPEG, Windows Media etc.

10. The method as claimed in claim 9, **characterized in that** either the same data are reproduced on the reproduction units (1, 2) or different channels of the data, particularly in the case of audio files in stereo format or multichannel, are reproduced on different reproduction units (1, 2).

11. The method as claimed in one of the preceding claims, **characterized in that** at least some of the data streams or data packets are temporarily buffered (5) in the reproduction units (1, 2) before reproduction, with audio files typically involving buffering in the region of approximately 1 to 5 sec, and with, particularly preferably, the buffering being performed dynamically and so as to be matched to the circumstances of the network.

12. The method as claimed in one of the preceding claims, **characterized in that** the individual reproduction units (1, 2) are synchronized in the region below 100 ms, preferably below 10 ms or below 2 ms, and particularly preferably below 1 ms.

13. The method as claimed in one of the preceding claims, **characterized in that** the network (4) is a wireless network, particularly a radio network.

14. The method as claimed in one of the preceding claims, **characterized in that** during the reproduction by at least one reproduction unit (1, 2) at least one further reproduction unit is switched in synchronously by virtue of the unit (2) which has been switched in automatically aligning itself with the present master (1) and starting reproduction itself after buffering some of the data.

15. The method as claimed in one of the preceding claims, **characterized in that** the data packets or data streams are either fetched from a separate data server (3), or are fetched on one of the reproduction units (1), or are already available on the reproduction units (1, 2), or are made available to the system in digital form via an analog/digital converter and/or possible compression/coding unit after supply in analog or digital form.

16. The method as claimed in one of the preceding claims, **characterized in that** the data packets or data streams are read from a data source into a ring buffer (5) in the master (1), with each byte read in being provided with a unique address, and **in that**, in a process which is independent of the data stream's being read into the ring buffer (5), the master (1) sends the data to the network from the ring buffer (5) in blocks, particularly straight after reading in, by broadcast, particularly by UDP broadcast, and also particularly by multicast, with the addition of a protocol header which contains, inter alia, the address of the first byte sent, the precise master time and the address of the next byte which is to be sent by the master (1) to the codec of the master (1).

17. The method as claimed in claim 16, **characterized in that** the address of the next byte which is to be sent by the master to the codec of the master (1) is sent at least partly in independent control blocks, which may be identical to the control blocks for checking the clock on the master.

18. The method as claimed in one of the preceding claims, **characterized in that**, to protect the data integrity when a slave (2) establishes that a data portion has been lost on the network (4), this data portion is sent again by the master (1) upon a request from the slave (2), with the master (1) performing this repeated sending only after a delay, particular in the region of a few ms, and with the slaves (2) making the requests in staggered fashion such that identical requests are sent only once over the network.

19. The method as claimed in one of the preceding claims, **characterized in that** the data streams or data packets are used to send at least one command, for example selected from the group Pause, Play, Stop, to the reproduction units (1, 2) together with an associated execution time, the execution time preferably being chosen such that at least the longest network delay time established in the network (4) between the master (1) and the reproduction unit (1, 2) can elapse between the transfer of the command to the network (4) and the execution time.

20. The method as claimed in one of the preceding claims, **characterized in that** the data streams or data packets are used to send the bit rate of the master (1) at which the master (1) provides the data streams or data packets on the network (4), the reproduction unit (1, 2) preferably using this bit rate to ascertain the delays which arise in the network.

21. The method as claimed in one of the preceding claims, **characterized in that** a reproduction unit (1, 2) which has been switched in transfers the data streams or data packets received from the network directly to the codec, and this codec rejects the supplied data by muting until the codec detects a first valid frame, the codec is then stopped and the current byte is noted, and the codec in the reproduction unit then processes the data stream or the data packets again and is switched to reproduction when this current byte is played on the master (1).

22. The method as claimed in one of the preceding claims, **characterized in that** at least one of the reproduction units (1, 2) is for its part used as master for a subnetwork, with appropriate repetitions preferably being forwarded to the topmost master.

23. The method as claimed in one of the preceding claims, **characterized in that** at least one of the reproduction units (1, 2) has a memory which is used as a source of audio data, the content of these audio data possibly being obtained from the master (1) or from another data source.

24. A data processing program for carrying out a method as claimed in one of claims 1 to 23.

25. A reproduction unit for carrying out a method as claimed in one of claims 1 to 24, **characterized in that** it has a network interface, a central computer unit with a memory and means for at least indirectly outputting data, particularly in the form of a loudspeaker, **characterized in that** the memory contains a permanently programmed data processing program as claimed in claim 19, and **in that** this program is activated automatically after the power supply is turned on, with the reproduction unit particularly preferably having means for automatically integrating the unit into the network.

## Revendications

1. Procédé de restitution de flux ou paquets de données transmises par un réseau (4), au moyen d'au moins deux appareils de restitution (1, 2) reliés au moins indirectement au réseau (4),
**caractérisé en ce que**
pour la synchronisation de la restitution au moyen des deux ou plusieurs appareils de restitution (1, 2), un des appareils de restitution qui sert de maître (1) définit son heure interne à titre de référence et les autres appareils de restitution (2) égalisent en tant qu'esclaves leur heure interne à celle du maître (1) par l'intermédiaire du réseau (4) ou copient l'heure maître et assurent la restitution des flux ou paquets de données en fonction de cette heure égalisée ou de cette copie de l'heure maître.

2. Procédé selon la revendication 1, **caractérisé en ce que** le réseau (4) est un réseau (4) dans lequel des paquets de données sont transmis de manière asynchrone ou de manière synchrone.

3. Procédé selon l'une des revendications précédentes, **caractérisé en ce que** l'égalisation de l'heure sur l'esclave (2) s'effectue avant la première restitution et est de manière particulièrement préférable mise à jour périodiquement pendant la restitution.

4. Procédé selon la revendication 3, **caractérisé en ce que** la mise à jour est utilisée pour réaliser sur l'esclave (2) une adaptation systématique de la vitesse d'avancement de l'horloge interne de l'esclave (2) à celle du maître (1) pour compenser les différences de caractéristique de temps de parcours du maître (1) et de l'esclave (2).

5. Procédé selon la revendication 4, **caractérisé en ce que** l'adaptation systématique consiste à échelonner l'horloge interne de l'esclave (2) par un facteur de correction constant.

6. Procédé selon l'une des revendications précédentes, **caractérisé en ce que** l'égalisation des horloges internes s'effectue en faisant interroger de préférence plusieurs fois l'horloge interne du maître (1) par l'esclave (2), **en ce qu'**au moins un paquet de données et de préférence plusieurs paquets de données qui peuvent être identiques aux paquets d'interrogation de l'heure du maître (1) sont transmis de l'esclave (2) au maître (1) et lui sont renvoyés et **en ce que** l'horloge interne de l'esclave (2) est égalisée à l'horloge du maître (1) en fonction du temps de parcours et en particulier du temps de parcours moyen des paquets de données entre le maître (1) et l'esclave (2).

7. Procédé selon la revendication 6, **caractérisé en ce que** le temps de parcours est calculé comme valeur moyenne en tenant compte des temps de traitement dans les appareils (2).

8. Procédé selon l'une des revendications précédentes, **caractérisé en ce que** le premier appareil de restitution (1, 2) interrogé par la restitution est défini automatiquement comme maître (1).

9. Procédé selon l'une des revendications précédentes, **caractérisé en ce que** les flux ou paquets de données sont des données numériques audio ou vidéo ou une combinaison de ces données, et en particulier des fichiers audio compressés ou non compressés, par exemple MP3, WAV, MPEG, Windows Media, etc.

10. Procédé selon la revendication 9, **caractérisé en ce que** les mêmes données sont restituées sur les appareils de restitution (1, 2) ou **en ce que** différents canaux de données, en particulier dans le cas des fichiers audio en format stéréo ou multicanal, sont restitués sur des appareils de restitution (1, 2) différents.

11. Procédé selon l'une des revendications précédentes, **caractérisé en ce qu'**au moins une partie des flux ou paquets de données est tamponnée (5) avant sa restitution dans les appareils de restitution (1, 2), et dans le cas des fichiers audio, on tamponne typiquement pendant environ 1 à 5 s, le tamponnage s'effectuant de manière particulièrement préférable de manière dynamique et adaptée aux conditions du réseau.

12. Procédé selon l'une des revendications précédentes, **caractérisé en ce que** la synchronisation des différents appareils de restitution (1, 2) s'effectue en une durée de moins de 100 ms, de préférence de moins de 10 ms ou de moins de 2 ms et de façon particulièrement préférable de moins de 1 ms.

13. Procédé selon l'une des revendications précédentes, **caractérisé en ce que** le réseau (4) est un réseau sans fil et en particulier un réseau radio.

14. Procédé selon l'une des revendications précédentes, **caractérisé en ce que** pendant la restitution par au moins un appareil de restitution (1, 2), au moins un autre est raccordé de manière synchronisée par le fait que l'appareil raccordé (2) s'égalise automatiquement sur le maître (1) existant et assure lui-même la restitution après tamponnage d'une partie des données.

15. Procédé selon l'une des revendications précédentes, **caractérisé en ce que** les paquets ou flux de données sont téléchargés depuis un serveur (3) de données distinct, sont repris de l'un des appareils de restitution (1), sont déjà présents sur les appareils de restitution (1, 2) ou sont présentés sous forme numérique par l'intermédiaire d'un convertisseur analogique-numérique et/ou d'une éventuelle unité de compression/codage, après injection sous forme analogique ou numérique.

16. Procédé selon l'une des revendications précédentes, **caractérisé en ce que** les paquets ou flux de données qui proviennent d'une source de données sont lus dans un tampon cyclique (5) du maître (1), chaque bit lu étant doté d'une adresse univoque, et **en ce que** dans une opération indépendante de la lecture du flux de données dans le tampon cyclique (5), le maître (1) injecte dans le réseau les données du tampon cyclique (5) par blocs, en particulier immédiatement après la lecture, et ce par diffusion, en particulier par diffusion UDP et en outre en particulier par multidiffusion, après les avoir complétées par une entête de protocole qui contient entre autres l'adresse du premier bit transmis, l'heure précise du maître et l'adresse du bit qui doit être transmis ensuite par le maître (1) au codeur-décodeur du maître (1).

17. Procédé selon la revendication 16, **caractérisé en ce que** l'adresse du bit qui doit être transmis ensuite par le maître au codeur-décodeur du maître (1) est transmise au moins en partie dans des blocs de contrôle indépendants qui peuvent être identiques aux blocs de contrôle qui servent à vérifier l'horloge du maître.

18. Procédé selon l'une des revendications précédentes, **caractérisé en ce que** pour assurer l'intégrité des données au cas où un esclave (2) constate une perte d'une partie des données sur le réseau (4), cette partie de données est envoyée de nouveau après requête de l'esclave (2) au maître (1), le maître (1) n'effectuant cette nouvelle émission qu'après un retard, en particulier de l'ordre de quelques ms, et les esclaves (2) présentant leurs requêtes de manière échelonnée de telle sorte que des demandes identiques ne soient envoyées qu'une fois sur le réseau.

19. Procédé selon l'une des revendications précédentes, **caractérisé en ce qu'**au moins une commande sélectionnée par exemple dans l'ensemble constitué des commandes pause, play, stop, est transmise dans les flux ou paquets de données en même temps que l'instant associé d'exécution sur les appareils de restitution (1, 2), l'instant d'exécution étant de préférence sélectionné de telle sorte que la plus grande durée de retard réseau entre le maître (1) et l'appareil de restitution (1, 2) constatée dans le réseau (4) puisse s'écouler entre la transmission de la commande au réseau (4) et l'instant d'exécution.

20. Procédé selon l'une des revendications précédentes, **caractérisé en ce que** le taux de bits du maître (1) auquel le maître (1) injecte dans le réseau (4) les flux de données ou paquets de données est transmis dans les flux ou paquets de données, l'appareil de restitution (1, 2) utilisant de préférence ce taux de bits pour déterminer les retards qui ont lieu dans le réseau.

21. Procédé selon l'une des revendications précédentes, **caractérisé en ce qu'**un appareil de restitution (1, 2) raccordé transmet directement au codeur-décodeur les flux ou paquets de données reçus du réseau, ce codeur-décodeur rejetant les données entrantes dans un circuit silencieux jusqu'à ce que le codeur-décodeur détecte une première trame valide, le codeur-décodeur étant ensuite arrêté pour enregistrer le byte en cours, le codeur de l'appareil de restitution reprenant ensuite le traitement du flux de données ou des paquets de données et étant commuté en restitution lorsque ce byte en cours a été joué sur le maître (1).

22. Procédé selon l'une des revendications précédentes, **caractérisé en ce qu'**au moins l'un des appareils de restitution (1, 2) est utilisé comme maître pour un sous-réseau, les répétitions correspondantes étant alors de préférence restituées sur le maître d'ordre hiérarchique le plus élevé.

23. Procédé selon l'une des revendications précédentes, **caractérisé en ce qu'**au moins l'un des appareils de restitution (1, 2) est doté d'une mémoire utilisée comme source de données audio, le contenu de ces données audio étant repris éventuellement du maître (1) ou d'une autre source de données.

24. Programme de traitement de données en vue de l'exécution d'un procédé selon l'une des revendications 1 à 23.

25. Appareil de restitution destiné à exécuter un procédé selon l'une des revendications 1 à 23, **caractérisé en ce qu'**il est doté d'une interface réseau, d'une unité centrale de calcul dotée d'une mémoire ainsi que de moyens pour délivrer des données au moins indirectement et qui présentent en particulier la forme d'un haut-parleur, **caractérisé en ce qu'**un programme de traitement de données selon la revendication 24 est enregistré de manière fixe dans la mémoire et **en ce que** ce programme active automatiquement l'injection de données après le branchement, l'appareil de restitution étant doté de façon particulièrement préférable de moyens d'intégration automatique de l'appareil dans le réseau.
